# EUROPÄISCHE PATENTSCHRIFT

(11) **EP 0 455 639 B1**
(45) Veröffentlichungstag und Bekanntmachung des Hinweises auf die Patenterteilung: **07.01.1993**
(21) Anmeldenummer: 89911809.5
(22) Anmeldetag: 10.10.1989
(51) Int. Cl.: B01D 29/15, B01D 29/66, B01D 29/70, B01D 29/82

(54) **VERFAHREN ZUM KLEINSTÜCKIGEN ABSPRENGEN DES FILTERKUCHENS AN EINEM AUSPRESSFILTER**
PROCESS FOR SPLITTING OFF SMALL PIECES OF FILTER CAKE FROM A PRESSURE FILTER
PROCEDE POUR FRACTIONNER EN PETITS MORCEAUX LE GATEAU DE FILTRE D'UN FILTRE-PRESSE

(30) Priorität: 26.01.1989 DE 3902200
(43) Veröffentlichungstag der Anmeldung: 13.11.1991
(73) Patentinhaber: HEINKEL INDUSTRIEZENTRIFUGEN GMBH & CO., D-74321 Bietigheim-Bissingen (DE)
(72) Erfinder: GERTEIS, Hans, D-7120 Bietigheim-Bissingen (DE)
(74) Vertreter: Hoeger, Stellrecht & Partner
(86) Internationale Anmeldenummer: EP8901189
(87) Internationale Veröffentlichungsnummer: WO9008588

(56) Entgegenhaltungen:
- EP-A- 0 036 318
- DE-A- 3 516 819

## Beschreibung

Die Erfindung betrifft ein Verfahren zum Absprengen des Filterkuchens an einem Auspreßfilter für Flüssigkeit-Feststoff-Gemische mit einem Außenmantel, mit einem den Außenmantel lösbar verschliessenden Deckel, mit einem vom Deckel in den Außenmantel hinein abstehenden, rohrförmigen Filterelement, an dessen Außenseite sich der abzusprengende Filterkuchen absetzt, mit einer im Betrieb des Filters zwischen dem Außenmantel und dem Filterelement liegenden, umstülpbaren Membran, mit einem Druckstutzen am Außenmantel zum Ein- und Ausleiten eines die Membran an den Filterkuchen anlegenden Druckmediums, mit einer zum Raum zwischen Membran und Filterelement führenden Einlaßleitung für das Flüssigkeit-Feststoff-Gemisch und mit einer aus dem Inneren des Filterelements herausführenden Auslaßleitung für das Filtrat, wobei das Filterelement unter Umstülpung und Ablösung der Membran vom Filterkuchen aus dem Außenmantel herausziehbar ist und man den an der Außenseite des Filterelements abgesetzten Filterkuchen durch Einleiten eines gasförmigen Druckmediums in das Innere des Filterelements absprengt. Ein derartiges Filter und ein derartiges Verfahren zu seinem Betrieb sind aus DE-A 3 516 819 bekannt.

Bei solchen Auspreßfiltern mit umstülpbarer Membran wird der Filterkuchen vom Filterelement bisher dann abgesprengt, wenn bei umgestülpter Membran das Filterelement ganz aus dem Außenmantel herausgezogen ist, wobei das Absprengen durch Hin- und Herdrehen des Filterelements um seine Achse unterstützt wird. Dabei gelingt es jedoch nur in den seltensten Fällen, den Filterkuchen kleinstückig abzusprengen. Normalerweise fällt der Filterkuchen in Gestalt großer, brettartiger Stücke vom Filterelement ab, so daß er aus der Austrittsöffnung des das Auspreßfilter umschliessenden Gehäuses erst nach separater Zerkleinerung, beispielsweise Zermahlung mit einer besonderen Vorrichtung, ausgeführt werden kann. Das nachträgliche Zerkleinern des abgesprengten Filterkuchens ist natürlich ein unerwünschter, zusätzlicher Arbeitsvorgang, den man gern vermeiden möchte.

Es ist Aufgabe der Erfindung, bei einem Auspreßfilter der in Rede stehenden Art ein Verfahren zum kleinstückigen Absprengen des Filterkuchens anzugeben, welches zu einer derart kleinteiligen Zerlegung des Filterkuchens führt, daß eine nachträgliche Zerkleinerung, insbesondere Zermahlung des Filterkuchens nicht mehr erforderlich ist und die entstehenden Teile ohne weiteres durch die Auslaßöffnung des das Auspreßfilter umgebenden Gehäuses austreten können.

Die Aufgabe wird erfindungsgemäß dadurch gelöst, daß man zum Zwecke der Absprengung des Filterkuchens in kleinen Stücken das gasförmige Druckmedium in das Innere des Filterelements einleitet, solange der Filterkuchen noch ganz oder teilweise von der umstülpbaren und noch an ihm anliegenden Membran umschlossen ist.

Die nachstehende Beschreibung dient im Zusammenhang mit beiliegender Zeichnung der weiteren Erläuterung der Erfindung. Es zeigen:

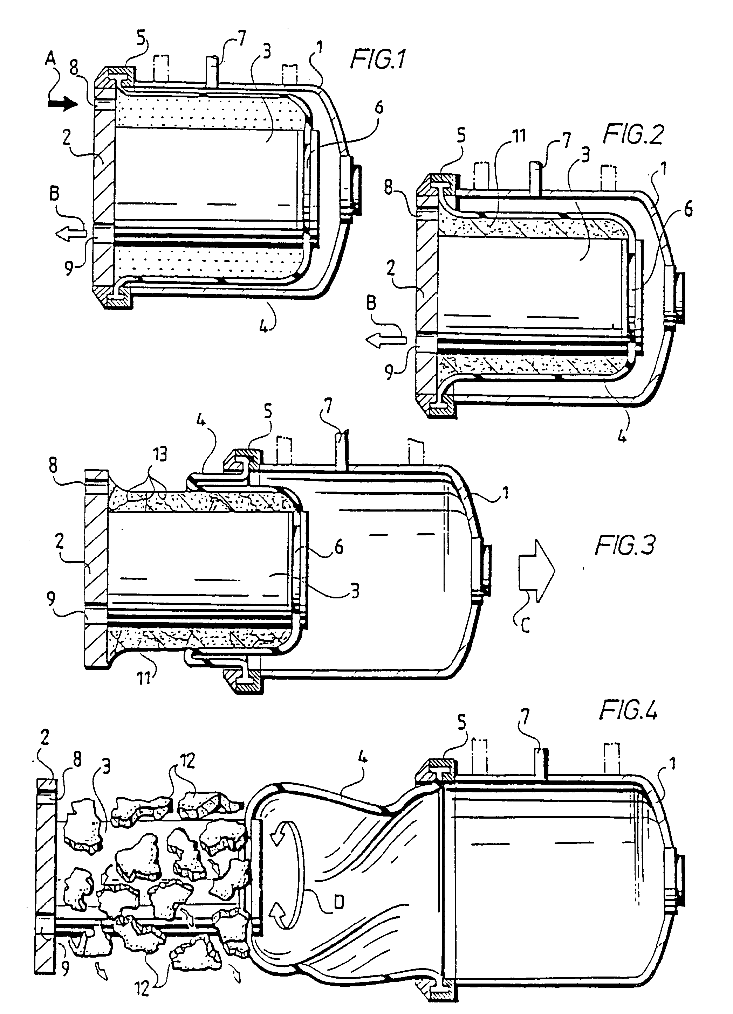

Figur 1 bis 4 verschiedene Betriebsstadien eines Auspreßfilters mit umstülpbarer Membran.

Das auf der Zeichnung dargestellte Auspreßfilter für Flüssigkeit-Feststoff-Gemische umfaßt einen kesselförmigen Außenmantel 1,der an seiner einen (in der Zeichnung rechts gelegenen) Seite verschlossen ist. Die gegenüberliegende, offene Stirnseite des Außenmantels 1 ist durch einen Deckel 2 dicht verschließbar. Vom Deckel 2 steht in das Innere des Außenmantels 1 hinein starr ein rohrförmiges Filterelement 3 ab, beispielsweise in Gestalt eines mit Filtertuch belegten Siebzylinders. Eine flexible, flüssigkeitsundurchlässige, umstülpbare, schlauchförmige Membran 4 ist mit ihrem einen Rand an einem Öffnungsflansch 5 des Außenmantels 1 und mit ihrem anderen Rand an einem Stirnflansch 6 des Filterelements 3 eingespannt. Der Außenmantel 1 weist einen Druckstutzen 7 zur Ein- und Ausleitung eines flüssigen Druckmediums auf. Am Deckel 2 ist eine zum Raum zwischen Filterelement 3 und Membran 4 führende Einlaßleitung 8 für das Flüssigkeit-Feststoff-Gemisch ausgebildet. Ferner weist der Deckel eine aus dem Inneren des Filterelements 3 herausführende Auslaßleitung 9 auf.

Das so beschriebene Auspreßfilter ist als Ganzes von einem (nicht dargestellten) abgedichteten Gehäuse umschlossen.

Mit dem beschriebenen Auspreßfilter wird in folgender Weise gearbeitet: Über die Einlaßleitung 8 wird in Richtung des Pfeiles A das zu filtrierende Flüssigkeit-Feststoff-Gemisch in den Raum zwischen Filterelement 3 und Membran 4 eingeleitet. Nach Verschluß der Leitung 8 wird über den Druckstutzen 7 flüssiges Druckmedium in den Raum zwischen Außenmantel 1 und Membran 4 eingeleitet, und hierdurch über die Membran 4 ein Druck auf das Gemisch ausgeübt. Das hierdurch ausgepreßte Filtrat gelangt in das Innere des Filterelements 3 unf fließt über die Auslaßleitung 9 in Richtung des Pfeiles B ab. Auf der Außenseite des Filterelements 3 verbleibt ein weitgehend entfeuchteter Filterkuchen 11, der noch von der dicht anliegenden Membran 4 umschlossen ist (Fig. 2).

Nach Abpumpen des flüssigen Druckmediums aus dem Raum zwischen Außenmantel 1 und Membran 4 wird - vgl. Fig. 3 - der Außenmantel 1 vom Deckel 2 in Richtung des Pfeiles C abgelöst. Dabei stülpt sich die Membran 4 in der aus Fig. 3 ersichtlichen Weise allmählich um, so daß ihre Innenseite zur Außenseite wird, bis schließlich das gesamte Filterelement 3 mit dem von ihm getragenen Filterkuchen 11 freiliegt. Hierauf wird durch Hin- und Herverdrehung des Deckels 2 in Richtung des Pfeiles D (Fig. 4) der Filterkuchen 11 in Form möglichst kleiner Stücke 12 abgesprengt. Die Stücke 12 des Filterkuchens treten aus der oben erwähnten Auslaßöffnung des das Auspreßfilter umschließenden Gehäuses aus. Nach dem Ablösen des Filterkuchens 11 vom Filterelement 3 wird dieses wieder in den Außenmantel 1 zurückgeführt, so daß der Ausgangszustand gemäß Fig. 1 erreicht ist und ein neuer Filterzyklus beginnen kann.

Es hat sich gezeigt, daß die Absprengung des Filterkuchens in der beschriebenen Weise meist nicht zu den gewünschten kleinen Stücken 12, sondern zu großen, brettartigen Abschnitten führen, welche aus der Auslaßöffnung des äußeren Gehäuses nicht mehr austreten können.

Erfindungsgemäß erfolgt eine Zerlegung des Filterkuchens 11 in kleine Stücke 12 zuverlässig in folgender Weise: Man leitet nach Ausbildung des Filterkuchens, also beispielsweise im Zustand des Auspreßfilters gemäß Fig. 2 ein gasförmiges Druckmedium in das Innere des Filterelements 3 ein, beispielsweise über die Leitung 9. Die Einleitung des gasförmigen Druckmediums, beispielsweise Druckluft, erfolgt also zu einem Zeitpunkt, zu welchem der Filterkuchen 11 auf dem Filterelement 3 noch ganz von der Membran 4 umschlossen ist. Es wurde gefunden, daß sich durch Einleitung des gasförmigen Druckmediums zahlreiche Risse 13 im Filterkuchen bilden, entlang welcher der Filterkuchen nach dem Öffnen des Auspreßfilters kleinstückig zerfällt.

Die Einleitung des gasförmigen Druckmediums wird vorzugweise während des Überganges vom Zustand gemäß Fig. 2 in denjenigen gemäß Fig. 4, also solange der Filterkuchen 11 noch teilweise von der umstülpbaren Membran 4 umschlossen ist, fortgesetzt. Auf diese Weise erreicht man schließlich das aus Fig. 4 ersichtliche, kleinstückige Absprengen des Filterkuchens. Die Stücke 12 des Filterkuchens sind dabei so klein, daß sie ohne weiteres aus der Auslaßöffnung des äußeren Gehäuses austreten können.

Von besonderem Vorteil ist es, wenn man das gasförmige Druckmedium intermittierend, d.h. Stoßweise in das Innere des Filterelements 3 einleitet.

## Patentansprüche

1. Verfahren zum Absprengen des Filterkuchens (11) an einem Auspreßfilter für Flüssigkeit-Feststoff-Gemische mit einem Außenmantel (1), mit einem den Außenmantel lösbar verschliessenden Deckel (2), mit einem vom Deckel in den Außenmantel hinein abstehenden, rohrförmigen Filterelement (3), an dessen Außenseite sich der abzusprengende Filterkuchen absetzt, mit einer im Betrieb des Filters zwischen dem Außenmantel und dem Filterelement liegenden, umstülpbaren Membran (4), mit einem Druckstutzen (7) am Außenmantel, zum Ein- und Ausleiten eines die Membran an den Filterkuchen anlegenden Druckmediums, mit einer zum Raum zwischen Membran und Filterelement führenden Einlaßleitung (8) für das Flüssigkeit-Feststoff-Gemisch und mit einer aus dem Inneren des Filterelements herausführenden Auslaßleitung (9) für das Filtrat, wobei das Filterelement unter Umstülpung und Ablösung der Membran vom Filterkuchen aus dem Außenmantel herausziehbar ist und man den an der Außenseite des Filterelements abgesetzten Filterkuchen durch Einleiten eines gasförmigen Druckmediums in das Innere des Filterelements absprengt, **dadurch gekennzeichnet,** **daß** man zum Zwecke der Absprengung des Filterkuchens (11) in kleinen Stücken das gasförmige Druckmedium in das Innere des Filterelements (3) einleitet, solange der Filterkuchen noch ganz oder teilweise von der umstülpbaren und noch an ihm anliegenden Membran (4) umschlossen ist.

2. Verfahren nach Anspruch 1, dadurch gekennzeichnet, daß man das gasförmige Druckmedium stoßweise einleitet.

## Claims

1. A method of jettisoning the filter cake (11) of a push-out filter for mixtures of fluids and solids having an outer casing (1), a removable cover (2) sealing the outer casing, a cylindrical filter element (3) projecting from the cover into the outer casing, on the outside of which the filter cake which is to be jettisoned is deposited, a membrane (4) between the outer casing and the filter element which can be turned inside out during the operation of the filter, a pressure pipe (7) on the outside of the outer casing for admitting and exhausting the pressure medium which holds the membrane against the filter cake, an inlet passage (8) for the mixture of fluids and solids leading to the space between the membrane and the filter element, and an outlet passage (9) for the filtrate, the process being such that the filter element can be drawn out of the outer casing while the membrane is turned inside out and freed from the filter cake, and the filter cake deposited on the outside of the filter element is jettisoned by the introduction of a gaseous pressure medium into the interior of the filter element, characterised in that for the purpose of jettisoning the filter cake (11) in small pieces the gaseous pressure medium is introduced into the interior of the filter element while the filter cake is still wholly or partly enclosed by the membrane which can be turned inside out and is still held against it.

2. A method according to claim 1, characterised in that the gaseous pressure medium is introduced in bursts.

## Revendications

1. Procédé pour détacher le gâteau de filtration (11) d'un filtre-presse d'un mélange liquide-matière solide, ayant un manteau extérieur (1), un couvercle (2) amovible fermant le manteau extérieur, un élément de filtration (3) à configuration tubulaire s'étendant à partir du couvercle à l'intérieur du manteau extérieur, sur la face extérieure duquel s'applique le gâteau de filtration à détacher, une membrane (4) retournable se trouvant pendant l'utilisation du filtre entre le manteau extérieur et l'élément de filtration, un tuyau de pression (7) raccordé au manteau extérieur pour l'arrivée et l'évacuation d'un milieu sous pression appliquant la membrane contre le gâteau de filtration, une conduite d'alimentation (8) aboutissant au volume existant entre la membrane et l'élément de filtration pour le mélange liquide-matière solide et une conduite d'évacuation (9) aboutissant à l'extérieur à partir du volume intérieur de l'élément de filtration pour le filtrat, dans lequel l'élément de filtration peut être tiré à l'extérieur du manteau extérieur avec le retournement et la séparation de la membrane par rapport au gâteau de filtration, et selon lequel on détache de la face extérieure de l'élément de filtration le gâteau de filtration appliqué contre ce dernier par l'introduction d'un milieu sous pression en phase gazeuse à l'intérieur de l'élément de filtration, caractérisé en ce que, en vue du détachement du gâteau de filtration (11) en petits morceaux, on introduit le milieu sous pression en phase gazeuse à l'intérieur de l'élément de filtration (3) aussi longtemps que ce gâteau de filtration est entouré encore entièrement ou partiellement par la membrane (4) retournable et encore appliquée contre lui.

2. Procédé selon la revendication 1 caractérisé en ce qu'on introduit le milieu sous pression en phase gazeuse par impulsions.
